Europäisches Patentamt

(19) European Patent Office

Office européen des brevets

(11) Publication number: **0 098 296**
**B1**

(12) **EUROPEAN PATENT SPECIFICATION**

(45) Date of publication of patent specification: **08.04.87**

(51) Int. Cl.⁴: **B 32 B 31/28,** G 03 C 5/00

(21) Application number: **83900529.5**

(22) Date of filing: **20.12.82**

(86) International application number:
**PCT/US82/01767**

(87) International publication number:
**WO 83/02254 07.07.83 Gazette 83/16**

(54) **OPTICAL RECORDING MEDIA.**

(30) Priority: **31.12.81 US 336339**

(43) Date of publication of application:
**18.01.84 Bulletin 84/03**

(45) Publication of the grant of the patent:
**08.04.87 Bulletin 87/15**

(84) Designated Contracting States:
**DE FR GB NL**

(56) References cited:
**EP-A-0 089 168**
**CH-A- 480 707**
**DE-A-3 139 718**
**FR-A-2 214 934**
**FR-A-2 368 779**
**US-A-3 423 740**
**US-A-3 483 531**
**US-A-4 147 667**
**US-A-4 217 374**
**US-A-4 255 686**
**US-A-4 265 720**
**US-A-4 265 991**
**US-A-4 278 734**

(73) Proprietor: **Western Electric Company,
Incorporated
222 Broadway
New York, NY 10038 (US)**

(72) Inventor: **BOSCH, Martin Albert
9 Braeburn Drive
Lincorft, NJ 07738 (US)**

(74) Representative: **Johnston, Kenneth Graham
et al
Western Electric Company Limited
5 Mornington Road
Woodford Green Essex, IG8 OTU (GB)**

Courier Press, Leamington Spa, England.

(56) References cited:
**US-A-4 289 822**
**US-A-4 307 408**
**US-A-4 340 662**
**US-A-4 357 179**
**US-A-4 357 616**

**PATENTS ABSTRACTS OF JAPAN, vol. 6, no. 27 (P-102)905r, 17th February 1982.**

**APPLIED PHYSICS LETTERS, vol. 40, no. 1, 1st January 1982, pages 8-10, American Institute of Physics, New York, US. M. A. BÖSCH: "Optical recording in hydrogenated semiconductors"**

## Description

### Background of the Invention
#### 1. *Field of the Invention*
This invention relates to optical storage media.

#### 2. *Art Background*
A variety of optical schemes have been proposed. Although these schemes vary widely in specific detail, they all have a certain aspect in common — the optical storage medium undergoes a modification which is observable as an optical change upon irradiation with energy such as light. For example, an optical recording medium has been proposed that utilizes an emulsion of dispersed silver. The silver absorbs the incident energy being employed for writing. After sufficient energy is absorbed, the heat generated by absorption melts the material in a localised area. In this matter, a void is formed which provides a detectable optical change in the medium. A problem with this system, however, is that the signal to noise ratio upon reading of the stored information is relatively low.

U.S. Patent 3,483,531 relates to a process for recording, reproducing and erasing information data in recording carriers. Information is detected due to the presence or absence of gas in a body, and not due to any modification caused by the gas in the body.

According to the present invention there is provided a process for storing information in a storage medium comprising the steps of applying energy to a localized area of said storage medium to produce a perceivable optical change in said localised area, characterised in that said storage medium comprises a solid hydrogenated amorphous body which upon application of said energy experiences a generation of hydrogen and so an increased internal hydrogen pressure that produces a modification of the surface of said body, said body being selected from silicon, germanium, and indium arsenide.

An optical storage medium includes trapped hydrogen atoms ormolecules or a source of hydrogen which undergoes an expansion of volume when the medium is exposed to an information writing source of energy. The hydrogen expansion causes localised deformations of the storage medium, which deformations serve to store the written information.

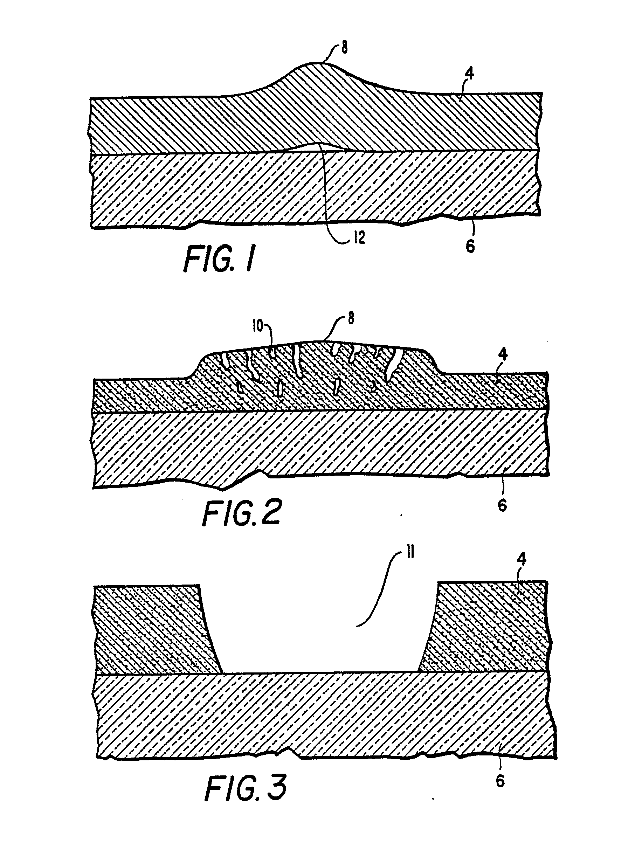

### Description of the Drawings
FIGS. 1—3 show examples of the types of distortion produced in optical recording media according to the invention.

### Detailed Description
The recording media in accordance with this invention include a material having (1) a solid network, i.e., a network of bound atoms as the supporting structure, and (2) atoms or molecules of hydrogen or hydrogen precursor which are bound to or trapped in the network. The material is further chosen so that application of energy in a localised area of the medium produces internal pressure in this area through the generation of hydrogen from the hydrogen precursor and thus increase in hydrogen pressure, or through the increase in the vapor pressure of trapped hydrogen. The material is further chosen so that the hydrogen is generated or the vapor pressure is increased while maintaining the solid network. In this regard some insubstantial amount of melting is tolerable. However, the regions of the medium where the hydrogen is generated or the hydrogen pressure is increased should remain essentially totally solid. The increased internal pressure induces a deformation in the solid network and results in a concomitant deformation in the medium surface. In the extreme, when the pressure has increased sufficiently (generally quite substantially) voids are formed. Either the surface deformation or the voids provide an observable optical change which is readable with a relatively high signal to noise ratio.

The materials hydrogenated amorphous silicon, i.e. silicon having a bound hydrogen content in the range 4 atomic % to 50 atomic %, hydrogenated amorphous germanium, i.e., germanium having a bound hydrogen content in the range 4 atomic % to 50 atomic %, or hydrogenated indium arsenide (4 to 40 atomic % hydrogen), are to be used as a recording medium. As shown in FIGS. 1—3, the optical medium can be in the form of a layer 4 supported on a substrate 6 of, for example, glass. In any of these embodiments, the application and absorption of energy, e.g. electromagnetic energy from a laser, such as the $5145 \times 10^{-10}$ metres (5145 Å) line from an argon ion laser, causes the evolution of hydrogen gas. As the hydrogen is evolved, the chemical binding structure of the material is modified but the material remains in the solid phase. Since the solid phase is maintained, pressure builds in the recording medium. This pressure is relieved through the deformation, 8 in FIG. 1, of the surface of the medium. The greater the hydrogen evolution the greater the degree of deformation. Indeed, for materials, such as hydrogenated germanium, after deformation some material is rearranged by the increasing pressure to form pores, 10 in FIG. 2. With even greater energies, the resulting pressure from the evolved hydrogen produces the total removal of solid material in a localised area as shown at 11 in FIG. 3, by, in essence, an explosive process. After the application of energy, the solid network generally becomes more stable in the areas where writing energy has been applied. Using a laser beam, information bits can be written onto the medium at a spacing generally equal to the size of the deformations produced in the writing process.

The energy employed to evolve hydrogen and/or increase the pressure of existing hydrogen depends on the absorption of energy by the medium being utilized. For the aforementioned materials, for example, electromagnetic radiation in the wavelength range from 0.3 µm to 1.0 µm is used. Other forms of radiation such as electron beams can be used. It is generally preferred to deposit a thin layer of the recording medium on a supporting substrate. Thicker, self-supporting medium layers can be used, but the thicker the medium layer, the greater the material and processing costs.

Additionally, the writing energy necessary to bring the hydrogen pressure to a level sufficient to achieve a deformation in the medium surface increases, up to a point, with medium thickness. Suitable materials preferably have a relatively large absorption coefficient for electromagnetic radiation. Thus, incident energy is absorbed typically within 0.5 µm (5000 Å) of the surface. In this manner, the hydrogen evolved or the hydrogen pressure is increased also within this distance. It follows that, for light writing sources, additional thickness of the medium beyond about 0.5 µm (5000 Å) generally does not substantially affect the energy required or the extent of hydrogen pressure generated, but does increase cost. (For energy such as high-energy electrons, penetration is much deeper and thus deeper regions in the medium are also affected). Additionally, the thicker the medium, the greater is the hydrogen pressure, and thus the greater the absorbed energy, necessary to produce the desired deformation, i.e., a deformation producing a perceivable optical change, preferably a reflectivity change of at least 20 percent. To maintain nominal writing energies, media thicknesses in the range 0.01 µm to 1.0 µm are typically employed. For exemplary materials such as hydrogenated amorphous silicon, hydrogenated amorphous germanium and hydrogenated amorphous indium arsenide, energies in the range 5.0 to 15 nJoules/µm², 2.5 to 7 nJoules/µm², and 1.0 to 5 nJoules/µm², respectively, are advantageously utilised with medium thicknesses in the range 0.01 µm to 1.0 µm.

For preferred writing speeds, e.g. 5 to 10 Mbits per second, power densities in the range 10 mW to 150 mW supplied to the area to be written are used.

Suitable media for the practice of the invention are produced by conventional techniques such as reactive sputtering. For example, in the case of hydrogenated amorphous silicon or hydrogenated amorphous germanium, a silicon or germanium target, respectively, is bombarded with ions such as argon ions. This bombardment and subsequent reaction with hydrogen is accomplished by striking a plasma in an atmosphere containing an inert gas such as argon together with hydrogen. Argon to $H_2$ mole ratios in the range 3:1 to 2:1 are advantageously employed at a total pressure from 0.267 to 4 Pascals (2 to 30 mTorr). In these environments radio frequency (r.f.) power densities of 0.1 to 2 watts/cm² are sufficient to produce plasma. A suitable deposition substrate such as a glass substrate is placed in the plasma with the surface on which the deposition is to occur facing the target. The substrate is maintained at a temperature of 250 degrees C for silicon and 100 degrees C for germanium. (Lower temperatures result in decreased hydrogen content in the deposited material). The sputtered material, e.g., silicon or germanium, reacts with the hydrogen and deposits on the substrate. The partial pressure of the hydrogen present during reactive sputtering determines the amount of hydrogen incorporated into the amorphous material.

Similarly to produce hydrogenated amorphous indium arsenide, indium arsenide is deposited on a substrate by conventional techniques such as molecular beam epitaxy. For example, a resistively heated oven containing indium and one containing arsenic are used as sources of these materials. The temperatures of the ovens determine the indium and arsenic content of the indium arsenide in the film. (Films that are slightly arsenic rich exhibit somewhat lower energy requirements for writing). A substrate is placed in the vapor flow from these boats and indium arsenide is deposited. The deposited indium arsenide is then placed in a hydrogen atmosphere and a plasma is struck in the hydrogen 6.67 to 26.66 Pascals pressure (50 mTorr to 200 mTorr pressure) with, for example, an r.f. power density in the range 0.01 to 0.5 watts/cm². Other techniques such as glow discharge decomposition of silanes, pyrolytic decomposition of materials such as silanes and germanes, homogeneous chemical vapor deposition of, for instance, silanes and germanes are also suitable for producing solid medium which upon application of energy experiences an increased internal hydrogen pressure.

The foregoing data is by way of example only. Other processing techniques and device parameters can be used.

Typically, a hydrogen concentration of the amorphous silicon or germanium material in the range 4 atomic % to 50 atomic % and 4 to 40 atomic % in amorphous indium arsenide is desirable. A hydrogen content of less than 4 atomic % typically produces unacceptably irregular deformations in the surface of the recording medium upon writing, e.g., deformations typically at least two times the writing spot size that are generally formed from a plurality of smaller irregular shaped deformations. Such irregular deformations lead to relatively low optical changes. Higher hydrogen content generally lead to lack of long-term stability for the films.

Reading of the stored information is done using known techniques relying upon the optical characteristic changes produced in the medium by the writing process.

**Claims**

1. A process for storing information in a storage medium comprising the steps of applying energy to a localised area of said storage medium to produce a perceivable optical change in said localised area, characterised in that said storage medium comprises a solid hydrogenated amorphous body (4) which upon application of

4

said energy experiences a generation of hydrogen and so an increased internal hydrogen pressure that produces a modification (8, 10, 11) of the surface of said body, said body being selected from silicon, germanium, and indium arsenide.

2. The process of claim 1, characterised in that the body comprises 4 to 50 atomic percent of hydrogen prior to the application of said energy.

3. The process of claim 1 or 2, characterised in that said modification comprises a void.

4. The process of claim 1 or 2, characterised in that said modification comprises a rise in said surface.

## Patentansprüche

1. Verfahren zum Speichern von Information in einem Speichermedium mit den Schritten einer Energiezufuhr zu einem lokalisierten Gebiet des Speichermediums, um eine wahrnehmbare optische Änderung in dem lokalisierten Gebiet zu erzeugen, dadurch gekennzeichnet, daß
— das Speichermedium einen festen hydrierten amorphen Körper (4) umfaßt, der auf die Energiezufuhr mit einer Wasserstofferzeugung und damit mit einem erhöhten inneren Wasserstoffdruck anspricht, der eine Modifizierung (8, 10, 11) der Oberfläche des Körpers erzeugt, wobei der Körper aus Silicium, Germanium und Indiumarsenid ausgewählt ist.

2. Verfahren nach Anspruch 1, dadurch gekennzeichnet, daß
— der Körper vor der Energiezufuhr 4 bis 50 Atom-% Wasserstoff enthält.

3. Verfahren nach Anspruch 1 oder 2, dadurch gekennzeichnet, daß
— die Modifizierung als eine Lücke vorliegt.

4. Verfahren nach Anspruch 1 oder 2, dadurch gekennzeichnet, daß
— die Modifizierung als eine Erhebung in der Oberfläche vorliegt.

## Revendications

1. Un procédé pour enregistrer de l'information dans un support d'enregistrement, comprenant les opérations qui consistent à appliquer de l'énergie à une zone localisée du support d'enregistrement, pour produire un changement optique perceptible dans cette zone localisée, caractérisé en ce que le support d'enregistrement consiste en un corps solide amorphe hydrogéné (4) qui manifeste une génération d'hydrogéné sous l'effet de l'application de l'énergie précitée, et donc une pression interne d'hydrogéné accrue qui produit une modification (8, 10, 11) de la surface du corps, ce corps étant sélectionné parmi le silicium, le germanium et l'arséniure d'indium.

2. Le procédé de la revendication 1, caractérisé en ce que le corps contient un pourcentage atomique d'hydrogène de 4 à 50 % avant l'application de l'énergie.

3. Le procédé de la revendication 1 ou 2, caractérisé en ce que la modification précitée consiste en un vide.

4. Le procédé de la revendication 1 ou 2, caractérisé en ce que la modification précitée consiste en une élévation de la surface.

FIG. 1

FIG. 2

FIG. 3